# EUROPEAN PATENT APPLICATION

(11) **EP 4 819 676 A1**
(43) Date of publication of application: **07.10.2026**
(21) Application number: 24910316.9
(22) Date of filing: 06.11.2024
(51) Int. Cl.: H04W 24/08

(54) **COMMUNICATION METHOD, APPARATUS AND SYSTEM**

(30) Priority: 27.12.2023 CN 202311834255
(71) Applicant: Huawei Technologies Co., Ltd., Shenzhen, Guangdong 518129 (CN)
(72) Inventor: WANG, Fanfan, Shenzhen, Guangdong 518129 (CN); HU, Xingxing, Shenzhen, Guangdong 518129 (CN); ZHANG, Haisen, Shenzhen, Guangdong 518129 (CN)
(74) Representative: Isarpatent
(86) International application number: PCT/CN2024/130159
(87) International publication number: WO 2025/139379

(57) **Abstract**

A communication method, apparatus, and system can be applied to the field of communication technology. The method comprises: a terminal device receives a first MBS service, and records measurement data of the first MBS service. The measurement data is used to determine coverage information and/or quality of service QoS information of the first MBS service. Further, the terminal device sends the first measurement data to a first network device, so that the network device determines the coverage status and QoS satisfaction status of the first MBS service based on the measurement data of the first MBS service. This helps the network device to adjust the performance of the first MBS service, thereby improving the user experience of the first MBS service.

## Description

This application claims priority to Chinese Patent Application No. 202311834255.3, filed with the China National Intellectual Property Administration on December 27, 2023, and entitled "COMMUNICATION METHOD, APPARATUS, AND SYSTEM", which is incorporated herein by reference in its entirety.

### TECHNICAL FIELD

This application relates to the field of communication technologies, and more specifically, to a communication method, apparatus, and system.

### BACKGROUND

A multicast/broadcast service (multicast/broadcast services, MBS) is a data distribution/delivery mode. A network device may simultaneously distribute/deliver same content to multiple terminal devices, thereby implementing efficient use of radio resources. However, under the current technical background, the network device cannot observe performance such as coverage and quality of service (quality of service, QoS) of the MBS service. As a result, the network device cannot optimize performance of the MBS service.

### SUMMARY

This application provides a communication method, apparatus, and system, so as to record measurement data for an MBS service, so that a network device can observe the coverage status and/or QoS of the MBS service.

According to a first aspect, a communication method is provided. The method may be performed by a terminal device or a component (such as a chip or a chip system) of the terminal device. This application does not impose limitation on this. The method comprises: receiving a first MBS service; recording first measurement data of the first MBS service, where the first measurement data is used to determine coverage information and/or QoS information of the first MBS service; and sending the first measurement data to the first network device.

In the technical solutions described above, the terminal device records measurement data of an MBS service and reports the measurement data of the MBS service to the network device. This enables the network device to observe and regulate the performance of the MBS service, which helps improve the user experience of the first MBS service.

With reference to the first aspect, in some implementations of the first aspect, the method further comprises: receiving measurement configuration information from a second network device, where the measurement configuration information indicates the terminal device to record first measurement data; and recording the first measurement data of the first MBS service includes: recording the first measurement data according to the measurement configuration information.

It should be noted that the second network device and the first network device may be the same network device, or may be different network devices.

In the technical solutions described above, the network device may configure, for the terminal device, information about an MBS service whose measurement data needs to be recorded, so that the terminal device records measurement data for a specific MBS service. This helps reduce the overheads required by the terminal device for recording measurement data and reporting measurement data, and helps meet a requirement of the network device for observing coverage and/or QoS of a specific MBS service.

With reference to the first aspect, in some implementations of the first aspect, the measurement configuration information indicates at least one of the following: at least one MBS session identifier, where each MBS session identifier of the at least one MBS session identifier is used to identify the at least one MBS service; at least one MBS service area, where each MBS service area of the at least one MBS service area provides at least one MBS service; or at least one downlink frequency that supports the MBS service.

In the foregoing technical solution, a specific manner in which the network device configures, for the terminal device, the information required for recording the MBS service measurement data is specified, so that the terminal device records the MBS service measurement data according to an indication of the measurement configuration information.

With reference to the first aspect, in some implementations of the first aspect, recording the first measurement data comprises at least one of the following: recording the first measurement data when the at least one MBS session identifier indicates the first MBS service and the first MBS service is received; recording the first measurement data when the first MBS service is received in the at least one MBS service area; or recording the first measurement data when the first MBS service is received on the at least one downlink frequency that supports the MBS service.

With reference to the first aspect, in some implementations of the first aspect, the method further comprises: determining, according to a distribution mode of the first MBS service, a minimization of drive-tests (minimization of drive-tests, MDT) mode used for recording the first measurement data; and recording the first measurement data comprises: recording the first measurement data in the MDT mode.

In the foregoing technical solution, measurement data is recorded in different MDT modes according to the distribution mode of the MBS service, which helps balance measurement efficiency, reporting efficiency of the MBS service measurement data, and communication overheads required for reporting the MBS measurement data.

With reference to the first aspect, in some implementations of the first aspect, the determining an MDT mode used for recording the first measurement data according to the distribution mode of the first MBS service comprises: when the distribution mode of the first MBS service is broadcast, determining that the MDT mode is logged MDT; or, when the distribution mode of the first MBS service is multicast or unicast, determining that the MDT mode is immediate MDT.

In the foregoing technical solution, when the distribution mode of the first MBS service is broadcast, the measurement data is recorded by using the logged MDT, which helps reduce overheads required for reporting the measurement data. When the distribution mode of the first MBS service is multicast or unicast, the measurement data is recorded by using the immediate MDT, which helps improve efficiency of reporting the measurement data.

With reference to the first aspect, in some implementations of the first aspect, recording the first measurement data comprises: recording the first measurement data by using the logged MDT.

In the foregoing technical solution, the terminal device records the measurement data of the MBS service by using the logged MDT, so that the network device determines whether the measurement data of the MBS service needs to be requested. When the network device does not request the measurement data of the MBS service, the terminal device does not report the measurement data of the MBS service. This helps save communication overheads.

With reference to the first aspect, in some implementations of the first aspect, the method further comprises: sending indication information to the first network device, where the indication information indicates that the first measurement data exists.

In the foregoing technical solution, the terminal device may separately indicate the existence of measurement data for the MBS service, so that the network device can determine whether to request the measurement data for the MBS service. When both the measurement data for the MBS service and the measurement data for conventional MDT (other services or no service) are stored at the terminal device, the network device may determine, based on the indication information, to preferentially request the measurement data for the MBS service, or not request the measurement data for the MBS service. This helps save communication overheads for transmitting measurement data.

With reference to the first aspect, in some implementations of the first aspect, the method further comprises: receiving request information from the first network device, where the request information is used to request the first measurement data; and sending the first measurement data to the first network device comprises: sending the first measurement data to the first network device according to the request information.

With reference to the first aspect, in some implementations of the first aspect, the first measurement data includes at least one of the following:
the MBS session identifier of the first MBS service;
the number of MBS radio bearers (MBS radio bearer, MRB) corresponding to the session of the first MBS service;
serving cell identifier information of a session providing the first MBS service;
neighboring cell identifier information of a session providing the first MBS service;
the service area information corresponding to the first MBS service;
downlink reference signal measurement results corresponding to a cell providing the first MBS service;
downlink reference signal measurement results corresponding to a cell providing the second MBS service, where the second MBS service is a service other than the first MBS service;
the block error rate corresponding to the session of the first MBS service;
the distribution mode indication information of the first MBS service, where the distribution mode indication information is used to indicate that the distribution mode of the first MBS service is one of broadcast, multicast, or unicast;
the multicast distribution mechanism indication information of the first MBS service, where the multicast distribution mechanism indication information is used to indicate that the distribution mechanism of the first MBS service is point-to-point transmission or point-to-multipoint transmission; or
the MBS interest indication information of the terminal device, where the MBS interest indication information indicates at least one of the following: the frequency of a broadcast service that the terminal device is receiving or is interested in receiving, the session identifier of an MBS service that the terminal device is receiving or is interested in receiving, or the priority of the terminal device in receiving a unicast service or a broadcast service.

The terminal device reports the first measurement data as described above to the network device. This helps the network device adjust the frequency supporting the MBS service, the number of MRBs, the MBS session, the MBS distribution mode, the multicast mechanism, and the like, to optimize the performance of the first MBS service and improve the user experience of the first MBS service.

According to the second aspect, a communication method is provided. The method may be performed by a network device or by a component of the network device (for example, a chip or a chip system). This application does not impose limitation on this. The method comprises: sending the first MBS service to the terminal device; and recording second measurement data of the first MBS service, where the second measurement data is used to determine coverage information and/or QoS information of the first MBS service.

In the foregoing technical solutions, the network device may record measurement data of the MBS service, which helps implement observation and control of the performance of the MBS service, thereby improving the experience of the users of the first MBS service. The measurement data of the MBS service recorded by the network device is complementary to the measurement data recorded by the terminal device, which helps the network device obtain more comprehensive measurement data of the MBS service.

With reference to the second aspect, in some implementations of the second aspect, the method further comprises: receiving first measurement data from the terminal device, where the first measurement data is measurement data of the first MBS service, and the first measurement data is used to determine coverage information and/or QoS information of the first MBS service.

In some implementations, based on the first measurement data and the second measurement data, the network device is helped to determine more comprehensive coverage information and/or QoS information of the first MBS service.

With reference to the second aspect, in some implementations of the second aspect, the method further comprises: sending measurement configuration information to the terminal device, where the measurement configuration information instructs the terminal device to record the first measurement data.

With reference to the second aspect, in some implementations of the second aspect, the measurement configuration information indicates at least one of the following: at least one MBS session identifier, wherein each MBS session identifier in the at least one MBS session identifier is used to identify at least one MBS service; at least one MBS service area, wherein each MBS service area in the at least one MBS service area provides at least one MBS service; or at least one downlink frequency supporting an MBS service.

With reference to the second aspect, in some implementations of the second aspect, the method further comprises: receiving indication information from the terminal device, where the indication information indicates that the first measurement data exists.

With reference to the second aspect, in some implementations of the second aspect, the method further comprises: sending request information to the terminal device, where the request information is used to request the first measurement data.

With reference to the second aspect, in some implementations of the second aspect, the first measurement data includes at least one of the following:
the MBS session identifier of the first MBS service;
the number of MRB corresponding to the session of the first MBS service;
serving cell identifier information of a session providing the first MBS service;
neighboring cell identifier information of a session providing the first MBS service;
the service area information corresponding to the first MBS service;
downlink reference signal measurement results corresponding to a cell providing the first MBS service;
downlink reference signal measurement results corresponding to a cell providing the second MBS service, where the second MBS service is a service other than the first MBS service;
the block error rate corresponding to the first MBS session;
the distribution mode indication information of the first MBS service, where the distribution mode indication information is used to indicate that the distribution mode of the first MBS service is one of broadcast, multicast, or unicast;
the multicast distribution mechanism indication information of the first MBS service, where the multicast distribution mechanism indication information is used to indicate that the distribution mechanism of the first MBS service is point-to-point transmission or point-to-multipoint transmission; or
the MBS interest indication information of the terminal device, where the MBS interest indication information indicates at least one of the following: the frequency of a broadcast service that the terminal device is receiving or is interested in receiving, the session identifier of an MBS service that the terminal device is receiving or is interested in receiving, or the priority of the terminal device in receiving a unicast service or a broadcast service.

With reference to the second aspect, in some implementations of the second aspect, the second measurement data includes at least one of the following: a downlink packet data convergence protocol (packet data convergence protocol, PDCP) service data unit (service data unit, SDU) data volume; a downlink average user throughput; a downlink packet delay; or a downlink packet loss rate.

With reference to the second aspect, in some implementations of the second aspect, recording the second measurement data comprises: when the distribution mode of the first MBS service is broadcast or multicast, recording the second measurement data at a granularity of each MRB, or recording the second measurement data at a granularity of each MRB of each terminal device.

With reference to the second aspect, in some implementations of the second aspect, recording the second measurement data comprises: when the distribution mode of the first MBS service is unicast, recording the second measurement data at a granularity of each radio data bearer (data radio bearer, DRB), or recording the second measurement data at a granularity of each DRB of each terminal device.

In the foregoing technical solution, when different distribution modes are used for the MBS service, the network device records the second measurement data at different levels of granularities, which helps implement regulation and control of the MBS service to different extents.

With reference to the second aspect, in some implementations of the second aspect, the second measurement data further comprises the number of terminal devices that receive the first MBS service.

With reference to the second aspect, in some implementations of the second aspect, the number of terminal devices that receive the first MBS service comprises at least one of the following:
the number of terminal devices that receive the first MBS service in a serving cell of the network device;
the number of terminal devices determined at a granularity of each MBS service or session identifier in the first MBS service;
the number of terminal devices determined at a granularity of each MBS broadcast service in the first MBS service;
the number of terminal devices determined at a granularity of each MBS multicast service in the first MBS service; or
the number of terminal devices determined at a granularity of each MRB in the first MBS service.

For beneficial effects that are not described in detail in the second aspect, refer to the description in the first aspect. Details are not described herein again.

According to the third aspect, an embodiment of this application provides a communication apparatus. The communication apparatus may be a device or apparatus with a chip, a device or apparatus integrated with a circuit, or a chip, a chip system, a module, or a control unit in the foregoing device or apparatus. This application does not specifically limit this. It should be noted that, in this application, when the communication apparatus is mentioned, the communication apparatus may refer to the communication apparatus itself, or may refer to a chip, a functional module, an integrated circuit, or the like that is in the communication apparatus and that performs the method provided in this application. This application does not specifically limit this. The apparatus is configured to perform the method provided in the first aspect or the second aspect. Specifically, the apparatus may include units and/or modules, such as a transceiver unit (or transceiver module) and a processing unit (or processing module), configured to perform the method provided in any implementation of the first aspect or the second aspect.

In some implementations, the processing unit may be at least one processor. The transceiver unit may be a transceiver, or an input/output interface. Optionally, the transceiver may be a transceiver circuit. Optionally, the input/output interface may be an input/output circuit.

In some implementations, the communication apparatus may be a chip, a chip system, or a circuit in a terminal device or a network device. The transceiver module may be an input/output interface, an interface circuit, an output circuit, an input circuit, a pin, or a related circuit on the chip, the chip system, or the circuit. The processing unit may be at least one processor, a processing circuit, or a logic circuit, or the like.

According to the fourth aspect, an embodiment of this application provides a processor, configured to perform the method provided in the foregoing aspects. For operations such as sending and receiving that are involved in the processor, unless otherwise specified, or, if not in conflict with the actual function or internal logic of the processor in the related description, the operations may be understood as output, reception, input, and the like performed by the processor. The operations may also be understood as sending and receiving performed by a radio frequency circuit and an antenna. This application does not limit this.

According to the fifth aspect, an embodiment of this application provides a communication system. The communication system includes a terminal device and a network device. The terminal device may perform the method provided in any implementation of the first aspect. The network device may perform the method provided in any implementation of the second aspect.

According to the sixth aspect, an embodiment of this application provides a computer-readable storage medium. The computer-readable storage medium stores instructions or program code, and when the instructions or the program code are executed by a processor, the method provided in any implementation of the first aspect or the second aspect is implemented.

According to the seventh aspect, an embodiment of this application provides a computer program product storing instructions. When the computer program product runs on a computer, the computer is caused to perform the method provided in any implementation of the first aspect or the second aspect.

According to the eighth aspect, an embodiment of this application provides a chip. The chip includes a processor and a communication interface. The processor reads, by using the communication interface, instructions stored in a memory, and performs the method provided in any implementation of the first aspect or the second aspect.

Optionally, as an implementation, the chip further includes a memory. The memory stores a computer program or instructions. The processor is configured to execute the computer program or instructions stored in the memory. When the computer program or instructions are executed, the processor is configured to perform the method provided in any one of the implementations of the first aspect or the second aspect.

For the beneficial effects brought by the third aspect to the eighth aspect, refer to the descriptions of the beneficial effects in the first aspect or the second aspect. Details are not described herein again.

### BRIEF DESCRIPTION OF DRAWINGS

FIG. 1 is a schematic diagram of a communication system to which an embodiment of this application is applied.
FIG. 2 is a schematic diagram of transmission of MBS service data according to an embodiment of this application.
FIG. 3 is a schematic flowchart of a communication method according to an embodiment of this application.
FIG. 4 is another schematic flowchart of a communication method according to an embodiment of this application.
FIG. 5 is yet another schematic flowchart of a communication method according to an embodiment of this application.
FIG. 6 is still another schematic flowchart of a communication method according to an embodiment of this application.
FIG. 7 is a schematic diagram of a communication apparatus according to an embodiment of this application.
FIG. 8 is another schematic diagram of a communication apparatus according to an embodiment of this application.
FIG. 9 is a schematic diagram of a chip system according to an embodiment of this application.

### DESCRIPTION OF EMBODIMENTS

The following describes the technical solutions in this application with reference to the accompanying drawings.

To facilitate understanding of the embodiments of this application, the following provides several explanations first.
1. Unless otherwise specified, the term "multiple" means two or more.
2. Unless otherwise specified or there is a logical conflict, the terms and/or descriptions in the different embodiments of this application are consistent and can be mutually referenced. The technical features in the different embodiments can be combined to form a new embodiment according to their inherent logical relationships.
3. The various numerical designations in this application are merely for the convenience of description and differentiation, and are not intended to limit the scope of protection of this application. The sequence numbers of the various designations in this application do not imply the order of execution. The order of execution of the various processes should be determined according to their functions and inherent logical relationships. For example, the terms "first," "second," "third," "fourth," and other various terms and designations (if any) in the specification, claims, and accompanying drawings of this application are used to distinguish similar objects, and are not necessarily intended to describe a specific order or sequence. The designations used in this way can be interchanged in appropriate circumstances, so that the embodiments described herein can be implemented in a sequence other than the sequence illustrated or described herein.
   In addition, any embodiment or design solution described in this application as "exemplary" or "for example" should not be construed as being more preferred or advantageous than other embodiments or design solutions. Specifically, the use of terms such as "exemplary" or "for example" is intended to present the relevant concepts in a concrete manner for ease of understanding.
4. The terms "include" and "have" and any of their variations are intended to cover non-exclusive inclusion. For example, a process, method, system, product, or device that includes a series of steps or units is not necessarily limited to those steps or units clearly listed, but may also include other steps or units that are not clearly listed or that are inherent to these processes, methods, products, or devices.
5. In this application, "used to indicate" may be understood as "enabling", where "enabling" may include direct enabling and indirect enabling. When it is described that certain information is used to enable A, this may include that the information directly enables A or indirectly enables A, and does not necessarily mean that the information carries A.
   Information that is enabled by the information is referred to as to-be-enabled information. In the specific implementation process, there are many ways to enable the to-be-enabled information. For example, but not limited to, the to-be-enabled information can be directly enabled, such as the to-be-enabled information itself or the index of the to-be-enabled information, etc. Alternatively, the to-be-enabled information can be indirectly enabled by enabling other information, where there is an association relationship between the other information and the to-be-enabled information. Furthermore, only a part of the to-be-enabled information may be enabled, while other parts of the to-be-enabled information are known or pre-agreed. For example, the arrangement order of various pieces of information (as pre-agreed, such as in a protocol specification) can be used to enable specific information, thereby reducing enabling overhead to some extent. At the same time, the common parts of various pieces of information can be identified and uniformly enabled, in order to reduce the enabling overhead caused by separately enabling the same information.
6. In this application, "preconfiguration" may include predefinition, for example, protocol definition. "Predefinition" may be implemented by pre-storing corresponding code, tables, or other methods that can be used to indicate related information in a device (for example, including various network elements). This application does not limit its specific implementation.
7. The "storage" or "saving" mentioned in this application may refer to being stored in one or more memories. The one or more memories may be separately disposed, or may be integrated into an encoder or decoder, a processor, or a communication apparatus. The one or more memories may alternatively include a part that is separately disposed and a part that is integrated into a decoder, processor, or communication apparatus. The type of the memory may be any form of storage medium, which is not limited herein.
8. The "protocol" mentioned in this application may refer to a standard protocol in the communication field. For example, it may include a 4th generation (4^{th} generation, 4G) network, a 5th generation (5^{th} generation, 5G) network protocol, a new radio (new radio, NR) protocol, a 5.5G network protocol, a 6th generation (6^{th} generation, 6G) network protocol, and related protocols applied in future communication systems. This application does not limit this.
9. An arrow or a block shown by a dotted line in a schematic diagram of the accompanying drawings in the specification of this application represents an optional step or an optional module.
10. Unless otherwise specified, "/" indicates that the associated objects are in an "or" relationship. For example, A/B may represent A or B. In this application, "and/or" is only an association relationship for describing associated objects, and indicates that three relationships may exist. For example, A and/or B may indicate the following three cases: A exists alone, both A and B exist at the same time, or B exists alone, where A and B may be singular or plural.

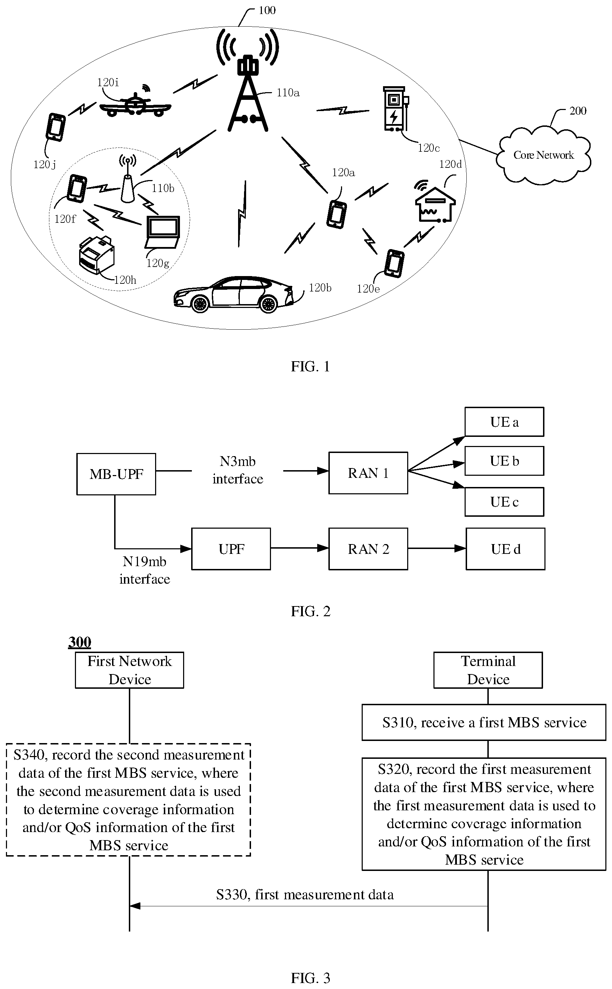

For ease of understanding, the following uses the communication system shown in FIG. 1 as an example to describe a communication system that can be applied to the embodiments of this application.

As shown in FIG. 1, a communication system includes a radio access network (radio access network, RAN) 100 and a core network (core network, CN) 200. The RAN 100 includes at least one RAN node (110a and 110b in FIG. 1, collectively referred to as 110) and at least one terminal device (120a to 120j in FIG. 1, collectively referred to as 120). The RAN may further include another RAN node, for example, a wireless relay device and/or a wireless backhaul device (not shown in FIG. 1). The terminal device 120 is connected to the RAN node 110 in a wireless manner. The RAN node 110 is connected to the core network 200 in a wireless or wired manner. The core network device in the core network 200 and the RAN node 110 in the RAN 100 may be different physical devices, or may be a same physical device that integrates a logical function of the core network and a logical function of the radio access network.

RAN 100 may be a cellular system related to the 3rd Generation Partnership Project (3rd generation partnership project, 3GPP), for example, a 4G, 5G, or 6G mobile communication system, a non-terrestrial network (non-terrestrial network, NTN) system, or a future-oriented evolution system. RAN 100 may alternatively be an open radio access network (open RAN, O-RAN, or ORAN), a cloud radio access network (cloud radio access network, CRAN) system, or a wireless fidelity (wireless fidelity, WiFi) system. RAN 100 may alternatively be a communication system obtained by integrating any two or more of the foregoing systems.

In a communication system, a device may send a signal to another device or receive a signal from another device. The signal may include information, signaling, or data, etc. The device may alternatively be replaced with an entity, a network entity, a communication device, a communication module, a node, a communication node, or the like. In this embodiment of this application, the device is used as an example for description.

In this embodiment of this application, the terminal device is a device with a wireless transceiver function, and may be user equipment (user equipment, UE), an access terminal, a subscriber unit, a subscriber station, a mobile station, a remote station, a remote terminal, a mobile device, a user terminal, a wireless communication device, a user agent, or a user device.

In this embodiment of this application, the terminal device may alternatively be a satellite phone, a cellular phone, a smartphone, a wireless data card, a wireless modem, a machine type communication device, a cordless phone, a session initiation protocol (session initiation protocol, SIP) phone, or a wireless local loop (wireless local loop, WLL) station, a personal digital assistant (personal digital assistant, PDA), a customer-premises equipment (customer-premises equipment, CPE), a smart point of sale (smart point of sale, POS) machine, handheld devices having a wireless communication function, computing devices or other processing devices connected to a wireless modem, in-vehicle devices, communication devices carried on high-altitude aircraft, wearable devices, drones, robots, a terminal in device-to-device (device-to-device, D2D) communications, a terminal in vehicle-to-everything (vehicle-to-everything, V2X), a virtual reality (virtual reality, VR) terminal device, or an augmented reality (augmented reality, AR) terminal device, a wireless terminal in industrial control, a wireless terminal in self driving, a wireless terminal in remote medical, a wireless terminal in smart grid, a wireless terminal in transportation safety, a wireless terminal in a smart city (smart city), a wireless terminal in a smart home (smart home), a terminal device in a communication network evolved after 5G, or the like. This is not limited. In this embodiment of this application, the apparatus used to implement a function of the terminal device may be a terminal device, or may be an apparatus that can support the terminal device in implementing the function, for example, a chip system or a chip. The apparatus may be installed in the terminal device. In this embodiment of this application, the chip system may include a chip, or may include a chip and another discrete component.

In the embodiments of this application, the terminal device may alternatively be a device with a communication function in a 6G communication system. The form or type of the terminal device in the 6G and other future communication systems is not limited.

In the embodiments of this application, the RAN node 110 may also be referred to as an access network device, an access node, or a RAN entity, and is used to assist the terminal device in implementing wireless access. A plurality of RAN nodes 110 may be nodes of the same type, or may be nodes of different types. In some scenarios, the roles of the RAN node 110 and the terminal device 120 are relative. For example, in FIG. 1, the network element 120i may be a helicopter or an unmanned aerial vehicle, which may be configured as a mobile base station. For those terminal devices 120j that access the RAN 100 through the network element 120i, the network element 120i is a base station; but for the base station 110a, the network element 120i is a terminal device. The RAN node 110 and the terminal device 120 are sometimes both referred to as communication apparatus. For example, in FIG. 1, the network elements 110a and 110b may be understood as communication apparatus with base station functions, and the network elements 120a-120j may be understood as communication apparatus with terminal functions.

In a possible scenario, the RAN node 110 may also be referred to as a network device, and may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, or an access node in a WiFi system, etc. The RAN node may be a macro base station (as 110a shown in FIG. 1), a micro base station, an indoor base station (as 110b shown in FIG. 1), a relay node, a donor node, or a wireless controller in a CRAN scenario. Optionally, the RAN node may alternatively be a server, a wearable device, a vehicle, or an in-vehicle device, etc. For example, in vehicle to everything (vehicle to everything, V2X) technology, the network device may be a road side unit (road side unit, RSU).

In another possible scenario, a plurality of RAN nodes cooperates to assist the terminal in implementing radio access, and different RAN nodes separately implement some functions of the base station. For example, the RAN node may be a centralized unit (central unit, CU), a distributed unit (distributed unit, DU), a CU-control plane (control plane, CP), a CU-user plane (user plane, UP), or a radio unit (radio unit, RU) etc. The CU and the DU may be separately disposed, or may be included in a same network element, for example, a baseband unit (baseband unit, BBU). The CU node and the DU node separate protocol layers of the gNB, some protocol layer functions are centrally controlled by the CU, and some or all protocol layer functions are distributed in the DU, and the CU centrally controls the DU. In an implementation, a radio resource control (radio resource control, RRC) layer, a packet data convergence protocol (packet data convergence protocol, PDCP) layer, and a service data adaptation protocol (service data adaptation protocol, SDAP) layer in a protocol stack are deployed in the CU; a radio link control (radio link control, RLC) layer, a media access control (media access control, MAC) layer, and a physical layer (physical layer, PHY) in a protocol stack are deployed in the DU. Therefore, the CU has processing capabilities of RRC, PDCP, and SDAP. The DU has processing capabilities of the RLC, MAC, and PHY. It may be understood that the division of the foregoing functions is only an example, and constitutes no limitation on the CU and the DU. The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, CU (or CU-CP and CU-UP), DU, or RU may also have different names. However, a person skilled in the art can understand their meanings. For example, in the ORAN system, CU can also be referred to as O-CU (open CU), DU can also be referred to as O-DU, CU-CP can also be referred to as O-CU-CP, CU-UP can also be referred to as O-CU-UP, and RU can also be referred to as O-RU. For ease of description, this application uses CU, CU-CP, CU-UP, DU, and RU as examples for description. Any one of the CU (or CU-CP, CU-UP), DU, and RU in this application may be implemented by using a software module, a hardware module, or a combination of a software module and a hardware module.

Optionally, for network elements in an ORAN system, each network element may implement the protocol layer functions shown in Table 1 below.

**Table 1**

| Network Element Name | Protocol Layer Function |
|---|---|
| O-CU | Used to implement the functions of the RRC layer, PDCP layer, service data adaptation protocol (SDAP) layer, and other control functions. |
| O-CU-CP | Used to implement the functions of the RRC layer and the control plane functions of the PDCP layer. |
| O-CU-UP | Used to implement the functions of the SDAP layer and the user plane functions of the PDCP layer. |
| O-DU | Based on lower-layer functional split, used to implement the functions of the RLC layer, the MAC layer, and the higher layer (close to the MAC layer) of the PHY layer. The higher-layer functions of the PHY layer include one or more of the following: forward error correction (forward error correction, FEC) encoding/decoding, scrambling/descrambling, or modulation/demodulation. |
| O-RU | Based on lower-layer functional split, used to implement the lower-layer (close to radio frequency) functions of the PHY and radio frequency functions. The lower-layer functions of the physical layer include one or more of the following: fast Fourier transform (fast Fourier transform, FFT) transformation/inverse fast Fourier transform (inverse fast Fourier transformation, iFFT) transformation, digital beamforming, or extraction and filtering of a physical random access channel (physical random access channel, PRACH). |
| | It can also be used to implement a TRP or RRH, but it includes the lower-layer functions of the PHY, such as FFT/iFFT, or PRACH extraction. |

It should be noted that in the ORAN system, the network device in this application may be one type of network element or multiple types of network elements in Table 1 above.

In the embodiments of this application, the core network device 200 refers to a device in the core network (core network, CN) that provides service support for the terminal device 120. Currently, some examples of core network devices are as follows: an access and mobility management function (access and mobility management function, AMF) entity, a session management function (session management function, SMF) entity, a user plane function (user plane function, UPF) entity, and so on. These are not listed one by one here. The AMF entity may be responsible for access management and mobility management of the terminal device. The SMF entity may be responsible for session management, such as session establishment of a user. The UPF entity may be a user plane function entity, and is mainly responsible for connecting an external network. It should be noted that, in this application, the entity may also be referred to as a network element or a functional entity. For example, the AMF entity may also be referred to as an AMF network element or an AMF functional entity. For another example, the SMF entity may also be referred to as an SMF network element or an SMF functional entity, and so on.

In the embodiments of this application, an apparatus configured to implement a function of a network device may be the network device. Alternatively, the apparatus may be an apparatus that can support the network device in implementing the function, for example, a chip system, a hardware circuit, a software module, or a hardware circuit plus a software module. The apparatus may be installed in the network device or used in a manner matching the network device. In the embodiments of this application, the apparatus configured to implement the function of the network device is merely used as an example in which the apparatus is the network device for description, and does not constitute a limitation on the solutions in the embodiments of this application.

It should be noted that, in the embodiments of this application, a scenario in which the network device/terminal device is located is not limited. In addition, the network device/terminal device may be a hardware device, or may be a software function running on dedicated hardware, or a software function running on general-purpose hardware. For example, the network device/terminal device is an entity that includes dedicated or general-purpose hardware devices and software functions. This application does not limit a specific form of the network device/terminal device.

For ease of understanding and description, the following briefly describes related terms involved in the embodiments of this application.

### 1. MDT

An automated drive-tests technology is a method for obtaining the relevant parameters required for network optimization. This method involves either the terminal device reporting measurement reports or the network device recording measurement data on its own. Through MDT, network performance can be evaluated. For example, it can detect whether there are weak coverage areas or coverage holes in the network, thereby achieving coverage optimization (such as improving coverage holes, weak coverage, excessive coverage, and uplink coverage, etc.).

For different data collection objects, MDT has two types of network management configurations: management-based MDT and signaling-based MDT. Management-based MDT can record the MDT measurement data of all terminal devices in a specific cell. This cell can be specified by a tracking area/cell global identifier (tracking area/cell global identifier, TA/CGI) list. Signaling-based MDT can record the MDT measurement data of one or more specific terminal devices. These specific one or more terminal devices can be specified by the operation, administration, and maintenance (OAM) network element of the core network.

According to the state in which the terminal device is located and the differences in the measurement reporting mechanism, the MDT may include logged MDT (logged MDT) and fast MDT (or immediate MDT). Details are as follows:
1) Logged MDT: This refers to the process in which the terminal device collects and stores measurement data when the terminal device is in an RRC idle state or an RRC inactive state. The terminal device indicates, to the network device, in an RRC message, the existence of the measurement data. When the network device requests the measurement data from the terminal device, the terminal device then reports the measurement data to the network device.

The network device may send configuration parameters to a terminal device in an RRC connected state, so that the terminal device collects measurement data by using the logged MDT. The configuration parameters may include: a trigger condition for logging (for example, time triggering or periodic triggering), a logging duration, a logging area, and the like. The forms of the logging area may include at least one of the following: a public land mobile network (public land mobile network, PLMN) list, a TA list, a CGI list, or a frequency list. The terminal device collects measurement data in the configured logging area. When the logging duration expires or the terminal device receives a new logging MDT measurement configuration, the terminal device stops collecting the measurement data. The measurement data includes but is not limited to: measurement results related to coverage of a serving cell or a neighboring cell, cell identification information, location information, time information, tracking information, and the like.

2) Fast MDT: This refers to measurements conducted when the terminal device is in the RRC connected state. Both the terminal device and the network device can collect measurement data. The terminal device can immediately report the measurement data to the network device.

The measurement configuration for fast MDT involves adding location information to the existing RRC measurement configuration. Additionally, information about the logging area can be added to indicate that the terminal device should perform fast MDT collection in a specific area. The measurement data collected by the terminal device may include one or more of the following: coverage-related measurements of serving cells or neighboring cells, location information, power headroom measurements, and L2 layer (i.e., data link layer) packet data convergence protocol (PDCP) delay measurement results. The measurement results on the network device side, i.e., the L2 layer measurement results, may include but are not limited to the following: physical resource block (PRB) utilization, throughput rate, PDCP data volume, packet loss rate, packet drop rate, the number of active terminal devices, and packet delay.

### 2. MBS

A data distribution/delivery mode, in which the network device may simultaneously distribute/deliver the same content to a plurality of terminal devices, so that efficient use of NR resources can be implemented. The MBS can provide any one of the following MBS services: broadcast service, multicast service, and unicast service. The broadcast service (broadcast service) is an MBS service delivered in a broadcast mode, and means that data of the same MBS service is simultaneously provided to all terminal devices in the MBS service area (All terminal devices in the MBS service area are authorized to receive the data). Multicast service (multicast service) is an MBS service delivered in multicast mode, and refers to providing data of the same MBS service to a group of terminal devices at the same time (that is, not all terminal devices in the MBS service area are authorized to receive data). The network device delivers the broadcast service to the terminal device by using a broadcast session (broadcast session). A terminal device in a radio resource control (radio resource control, RRC) idle (RRC idle), an RRC inactive (RRC inactive), and an RRC connected (RRC connected) state may all receive a related broadcast service. The broadcast service supports only a point-to-multipoint (point to multipoint, PTM) transmission mechanism, and does not support a hybrid automatic repeat request (hybrid automatic repeat request, HARQ). The network device delivers the multicast service to the terminal device by using a multicast session (multicast session), and the terminal device in an RRC connected state may receive the multicast service by using a point to point (point to point, PTP) and/or a PTM transmission mechanism. HARQ can be applied to PTP and PTM transmission. The unicast service is an MBS service delivered in a unicast mode, and means that the RAN that does not support the MBS sends data of the MBS service to the terminal device in a unicast mode.

According to whether the network device supports the MBS, delivery modes for transmitting data of the MBS service may be classified into two types, that is, a shared delivery mode (shared delivery mode) and an individual delivery mode (individual delivery mode).
1) Shared delivery mode: It may also be referred to as a "multicast/broadcast" mode or a "multicast" mode. In the shared delivery mode, a delivery tunnel (or referred to as a delivery channel) between the UPF and the RAN and a delivery tunnel (on an air interface side) between the RAN and the UE are shared by a plurality of UEs in the multicast group. When the network device supports the MBS, the shared delivery mode may be used to transmit the data of the MBS service.
   FIG. 2 is used as an example. When data of an MBS service is transmitted, a tunnel may be used between a multicast/broadcast user plane function (multicast broadcast user plane function, MB-UPF) and the RAN 1 to transmit the data of the MBS service, for example, a general tunnel protocol (general tunnel protocol, GTP) tunnel is used. A tunnel used to transmit data of the MBS service between the MB-UPF and the RAN 1 is a multicast session sharing tunnel, and the multicast session sharing tunnel is shared by UE a, UE b, and UE c.
2) Individual delivery mode: Also known as the "unicast" mode, it can be understood as "point-to-point" (point to point, PTP) communication. The unicast mode refers to the delivery tunnel between the UPF and the RAN, as well as the delivery tunnel on the air interface side between the RAN and the UE, being exclusively used by a single UE. The individual delivery mode can be used to transmit data for MBS services (in unicast mode), or to transmit data for unicast services. When network devices do not support MBS, the individual delivery mode can be adopted. For example, using FIG. 2 as an example, when the RAN 2 where UE d is camped does not support MBS, the data of RAN 2 comes from the unicast UPF. The delivery channel from the unicast UPF to RAN 2, as well as the delivery channel on the air interface side from RAN 2 to UE d, are exclusively used by UE d. The data delivery path is as follows: multicast UPF → unicast UPF → RAN 2 → UE d.

As described above, under the current technological background, it is impossible to perform measurement and data collection for MBS services. This results in network devices being unable to optimize the performance of MBS services. In view of this, the embodiments of this application provide a communication method, apparatus, and system, which can record measurement data for MBS services, thereby achieving performance optimization of MBS services.

FIG. 3 shows a schematic flowchart of a communication method according to an embodiment of this application. Method 300 may be applied to the system shown in FIG. 1. The execution entity of method 300 may be a terminal device or a first network device, or may also be a component of the terminal device or the first network device, for example, a chip, a chip system, or a circuit. This application does not impose any limitation on this. Steps described below as being performed by a single execution entity (for example, a terminal device or a first network device) may also be divided into steps performed by multiple execution entities. These execution entities may be logically and/or physically separated. Method 300 may include the following steps.

S310, a terminal device receives a first MBS service.

For example, the first MBS service may come from the first network device, or may come from another network device, for example, a network device to which a cell on which the terminal device currently camps belongs, a network device to which a serving cell belongs, a network device to which a primary cell belongs, or a network device to which a neighboring cell belongs.

For example, the first MBS service may include one or more MBS services and a distribution mode of the first MBS service (or referred to as a service type of the first MBS service) may also include one or more of a unicast service, a multicast service, or a broadcast service.

S320, the terminal device records first measurement data of the first MBS service, where the first measurement data is used to determine coverage information and/or QoS information of the first MBS service.

For example, a behavior of the terminal device recording the measurement data of the MBS service may be clearly defined in advance, so that the terminal device records the measurement data of the MBS service when receiving the MBS service. Alternatively, the network device that sends the first MBS service may instruct the terminal device to record the MBS service measurement data. The terminal device records the first measurement data when receiving the first MBS service.

For example, a method by which the terminal device records the first measurement data may be MDT measurement, or may be another measurement, for example, a report associated with a self-organizing network (self-organizing network, SON), such as one or more of a radio link failure report, a random access report, an RRC connection establishment/recovery failure report, or a handover success report.

In some implementations, for example, the first MBS service is one MBS service, the first measurement data includes at least one of the following items 1) to 10):
1) The MBS session identifier (MBS session identifier) of the first MBS service.
2) The number of MRBs corresponding to the session of the first MBS service.
3) Serving cell identifier information corresponding to a session that provides the first MBS service. The serving cell may be a primary cell of the UE in a connected state, or may be a special cell of a primary cell group and/or a special cell of a secondary cell group in a case of dual connectivity, or may be a cell included in the primary cell group, and a special cell and a secondary cell included in the secondary cell group. In other words, the terminal device receives MBS service session data from the serving cell.
3) Neighboring cell identifier information corresponding to a session that provides the first MBS service.
4) Information about the service area (MBS service area) corresponding to the first MBS service.
5) Downlink reference signal measurement results corresponding to a cell that provides the first MBS service.
6) Downlink reference signal measurement results corresponding to a cell that provides a second MBS service, where the second MBS service is any service other than the first MBS service.
7) The block error rate (block error rate, BLER) corresponding to the session of the first MBS service. Here, the BLER is the ratio of the number of erroneous blocks received by the terminal device within a time period to the total number of blocks sent by the network device. That is, the error rate of the transmission blocks after being checked by the cyclic redundancy check code (cyclic redundancy check, CRC) within a time period. "Block" refers to a series of consecutive bits related to a channel. When any bit within a block is erroneous, the block is referred to as an erroneous block.
8) Distribution mode indication information for the first MBS service, or service type indication information for the first MBS service. The distribution mode indication information is used to indicate that the distribution mode of the first MBS service is one of broadcast, multicast, or unicast, or that the service type is one of broadcast, multicast, or unicast.
9) When the distribution mode of the first MBS service is multicast, the first measurement data may further include multicast distribution mechanism indication information for the first MBS service. The multicast distribution mechanism indication information is used to indicate that the distribution mechanism of the first MBS service is one of PTP transmission or PTM transmission.
10) MBS interest indication information of the terminal device. The MBS interest indication information indicates at least one of the following: the frequency of a broadcast service that the terminal device is receiving or is interested in receiving; the session identifier of an MBS service that the terminal device is receiving or is interested in receiving; or the priority of the terminal device in receiving unicast services and broadcast services.

Among them, a service that the terminal device is interested in receiving can be understood as a service that the terminal device wants to receive. In other words, the terminal device has not yet received this service, but it hopes to receive this service in subsequent communication processes.

In some implementations, the manner in which the terminal device records the first measurement data includes any one of the following examples:
In one example, the terminal device uses logged MDT to record the first measurement data.

In another example, the terminal device determines, based on the distribution mode of the first MBS service, the MDT mode for recording the first measurement data. More specifically, when the distribution mode of the first MBS service is broadcast, the terminal device uses logged MDT to record the first measurement data; or when the distribution mode of the first MBS service is multicast or unicast, the terminal device uses immediate MDT to record the first measurement data.

In another example, the terminal device determines, based on the RRC state, the MDT mode for recording the first measurement data. More specifically, when the RRC state of the terminal device is RRC idle state or RRC inactive state, the terminal device uses logged MDT to record the first measurement data; or when the RRC state of the terminal device is RRC connected state, the terminal device uses immediate MDT to record the first measurement data.

In some implementations, before S320 is performed, the method further comprises: receiving, by the terminal device, measurement configuration information from a second network device, where the measurement configuration information instructs the terminal device to record the first measurement data.

Among them, the measurement configuration information may indicate at least one of the following items 1) to 3):
1) At least one MBS session identifier, where each MBS session identifier in the at least one MBS session identifier is used to identify at least one MBS service. The MBS service indicated by the at least one MBS session identifier may include the first MBS service.
2) At least one MBS service area, where each MBS service area in the at least one MBS service area provides at least one MBS service. The MBS service provided by the at least one MBS service area may include the first MBS service.
   For example, at least one of a TA list, a cell list, or a PLMN list may be used to indicate at least one MBS service area.
3) At least one downlink frequency that supports an MBS service, where the MBS service transmitted by the at least one downlink frequency that supports an MBS service may include the first MBS service.

For example, the measurement configuration information may be sent or indicated by a core network (such as an AMF entity) to the second network device. The second network device may send the measurement configuration information to the terminal device through an RRC message.

For example, the second network device and the network device that sends the first MBS service to the terminal device may be the same network device.

Further, recording, by the terminal device, the first measurement data of the first MBS service comprises: recording the first measurement data according to the measurement configuration information. More specifically, when at least one MBS session identifier indicates the first MBS service, and the terminal device receives the first MBS service, the terminal device records the first measurement data; or, when the terminal device receives the first MBS service in the at least one MBS service area, the terminal device records the first measurement data; or, when the terminal device receives the first MBS service in the at least one downlink frequency that supports the MBS service, the terminal device records the first measurement data.

S330, the terminal device sends the first measurement data to the first network device.

For example, the first network device and the second network device may be the same network device.

In some implementations, the method further comprises: the terminal device sends indication information to the first network device, where the indication information indicates that the first measurement data exists. Further, the terminal device receives request information from the first network device, where the request information is used to request the first measurement data. The terminal device sends the first measurement data to the first network device, including: the terminal device sends the first measurement data to the first network device based on the request information. For example, when the terminal device uses logged MDT to record the first measurement data, the terminal device may send the first measurement data to the first network device in the foregoing manner. It should be understood that the first measurement data is different from common MDT data, and the first measurement data is measurement data of an MBS service.

When the terminal device uses the immediate MDT to record the first measurement data, the terminal device may send the first measurement data to the first network device after recording the first measurement data, without a request from the first network device.

For the indication information sent by the terminal device to the first network device, the request information received by the terminal device from the first network device, and the first measurement data sent by the terminal device to the first network device, the information transmission between the terminal device and the network device may be direct transmission, or may be forwarded through a network device to which a primary cell of the terminal device belongs.

For example, the terminal device may send the indication information by using an RRC message. The RRC message includes but is not limited to: an RRC resume complete message, an RRC reestablishment complete message, an RRC setup complete message, and an RRC reconfiguration complete message.

It should be noted that, in actual implementation, the first network device may obtain measurement data of the first MBS service recorded by a plurality of terminal devices.

In some implementations, when the first MBS service is sent by the first network device, method 300 may further include S340: the first network device records second measurement data of the first MBS service.

In some implementations, the second measurement data may include at least one of the following: a downlink PDCP SDU data volume (or referred to as an M4 measurement result), a downlink average user throughput rate (or referred to as an M5 measurement result), a downlink packet delay (or referred to as an M6 measurement result), a downlink packet loss rate (or referred to as an M7 measurement result), and the number of terminal devices that receive the first MBS service.

Herein, when the distribution mode of the first MBS service is broadcast or multicast, the first network device performs, at a granularity of each MRB, one or more of the M4 measurement to the M7 measurement, to obtain one or more of the M4 measurement result to the M7 measurement result. Alternatively, when the distribution mode of the first MBS service is broadcast or multicast, the first network device performs, at a granularity of each MRB of each terminal device, one or more of the M4 measurement to the M7 measurement, to obtain one or more of the M4 measurement result to the M7 measurement result. When the distribution mode of the first MBS service is unicast, the first network device performs one or more of the M4 measurement to the M7 measurement at a granularity of each DRB, to obtain one or more of the M4 measurement result to the M7 measurement result. Alternatively, when the distribution mode of the first MBS service is unicast, the first network device records, at a granularity of each DRB of each terminal device, one or more of the M4 measurement to the M7 measurement, to obtain one or more of the M4 measurement result to the M7 measurement result.

For example, when the first network device performs the M6 measurement, the first network device may determine the downlink packet delay according to an HARQ ACK value in an RLC unacknowledged mode (unacknowledged mode, UM) or an RLC ACK value in an RLC acknowledged mode (acknowledged mode, AM). When performing the M7 measurement, the first network device may determine the downlink packet loss rate based on the HARQ ACK value and the NACK value in the RLC UM mode, or the RLC ACK value and the NACK value in the RLC AM mode.

In some implementations, if the first MBS service includes one or more MBS services, the number of terminal devices that receive the first MBS service may include at least one of the following: the number of terminal devices that receive the first MBS service in a serving cell of the first network device; the number of terminal devices determined by using each MBS service or session identifier of the first MBS service as a granularity; the number of terminal devices determined by using each MBS broadcast service in the first MBS service as a granularity; the number of terminal devices determined by using each MBS multicast service in the first MBS service as a granularity; and the number of terminal devices determined by using each MRB in the first MBS service as a granularity.

In some implementations, the first network device optimizes the performance of the first MBS service based on the first measurement data and/or the second measurement data. For example, the first network device adjusts the frequency supporting the MBS service, the number of MRBs, the MBS service type (MBS session), the MBS distribution mode, the multicast mechanism, and the like, to optimize the performance of the first MBS service and improve the user experience of the first MBS service. For example, when the first measurement data and the second measurement data are MDT data, the first network device may implement coverage range optimization based on the MDT, QoS verification based on the MDT, and the like.

The communication method provided in the embodiments of this application provides a method for recording measurement data of an MBS service, which helps implement optimization of performance of the MBS service.

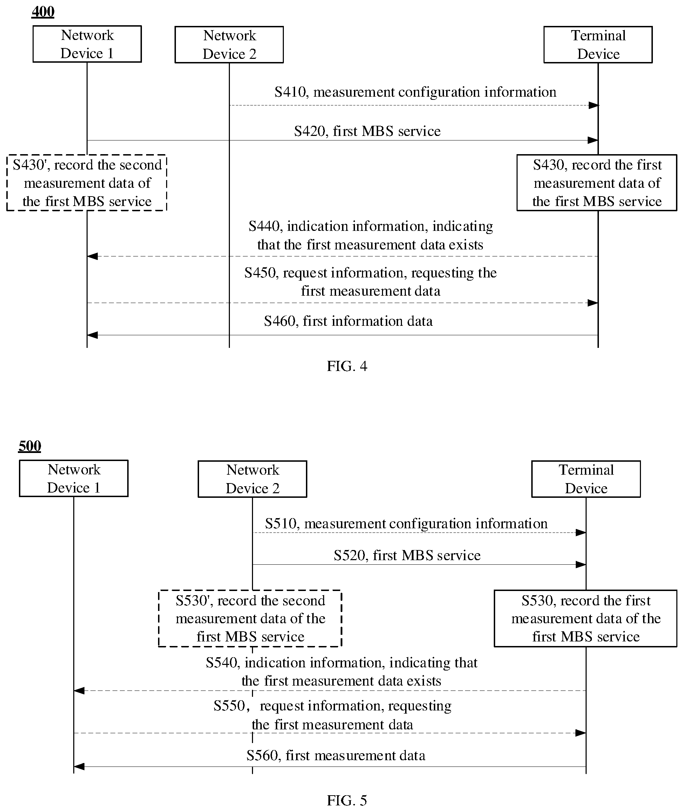

FIG. 4 shows another schematic flowchart of a communication method according to an embodiment of this application. Method 400 may be considered as a further description of method 300, or method 400 may be considered as a refinement of an application scenario of method 300. The execution entity of method 400 may be a terminal device and a network device, or may be a component of the terminal device and the network device, for example, a chip, a chip system, or a circuit. This application does not limit this. Method 400 may include the following steps.

S410, the network device 2 sends measurement configuration information to the terminal device.

For example, for the content of the measurement configuration information, refer to the description in method 300. Details are not described herein again. The network device 2 may be considered as an example of the second network device in method 300.

S420, the network device 1 sends the first MBS service to the terminal device.

For example, the network device 1 may be considered as an example of the first network device in method 300. The first MBS service may be the first MBS service in method 300.

In some implementations, the network device 2 may be a serving network device when the terminal device is in a connected state, and the network device 1 may be a serving network device when the terminal device enters a connected state again or is always in a connected state. Alternatively, the network device 1 may be a network device to which a cell on which the terminal device currently camps belongs, and the network device 2 may be a serving network device in a connected state before the terminal device enters the inactive state/idle state. Alternatively, the network device 2 may be a network device to which a cell on which the terminal device camps belongs, and the network device 1 may be a network device to which a cell reselected by the terminal device belongs, or a network device to which a cell on which the terminal device always camps belongs.

S430, the terminal device records the first measurement data of the first MBS service.

For a specific implementation of the terminal device recording the first measurement data, refer to the description in S320. Details are not described herein again. For example, the terminal device may record the first measurement data based on the measurement configuration information.

S460, the terminal device sends the first measurement data to the network device 1.

For a specific implementation of the terminal device sending the first measurement data to the network device 1, refer to the description in S330. Details are not described herein again.

Optionally, method 400 may further include S430': the network device 1 records the second measurement data of the first MBS service.

Optionally, before S460 is performed, method 400 may further include S440 and S450. For example, when the terminal device records the first measurement data by using the logged MDT, the terminal device may further perform: S440, the terminal device sends indication information to the network device 1, where the indication information indicates that the first measurement data exists; and S450, the network device 1 sends request information to the terminal device, where the request information is used to request the first measurement data.

In this application, the network device 1 may adjust, based on the received first measurement data and/or the second measurement data recorded by the network device 1, the frequency, the number of MRBs, the MBS service type (MBS session), the MBS distribution mode, the multicast mechanism, and the like that are related to the first MBS service and that support the MBS service.

FIG. 5 shows another schematic flowchart of a communication method according to an embodiment of this application. Method 500 may be considered as a further description of method 300, or method 500 may be considered as a refinement of an application scenario of method 300. Method 500 may also be performed by a terminal device and a network device, or may be performed by a component of the terminal device and the network device, for example, a chip, a chip system, or a circuit. This application does not limit this. Method 500 may include the following steps.

S510, the network device 2 sends measurement configuration information to the terminal device.

For example, for the content of the measurement configuration information, refer to the descriptions in Method 300. Details are not repeated herein. The network device 2 may be considered as an example of the second network device in Method 300.

S520, the network device 2 sends a first MBS service to the terminal device.

For example, the first MBS service may be the first MBS service in Method 300.

S530, the terminal device records the first measurement data of the first MBS service.

For the specific implementation of the terminal device recording the first measurement data, refer to the descriptions in S320, and details are not described herein again. For example, the terminal device may record the first measurement data based on the measurement configuration information.

S560, the terminal device sends the first measurement data to the network device 1.

For example, the network device 1 may be considered as an example of the first network device in method 300. It should be understood that the network device 1 is a network device that can provide the first MBS service for the terminal device.

In some implementations, the network device 2 may be a serving network device to which the terminal device belongs when the terminal device is in a connected state, or a network device to which a cell on which the terminal device camps belongs. The network device 1 may be a serving network device of the terminal device when the terminal device enters the connected state again, or a serving network device of the terminal device when the terminal device is always in a connected state.

Optionally, method 500 may further include S530': the network device 2 records second measurement data of the first MBS service.

Optionally, before S560 is performed, method 500 may further include S540 and S550. For example, when the terminal device records the first measurement data by using the logged MDT, the terminal device may further perform: S540, the terminal device sends indication information to the network device 1, where the indication information indicates that the first measurement data exists; and S550, the network device 1 sends request information to the terminal device, where the request information is used to request the first measurement data.

In this embodiment of this application, the network device 1 may adjust, based on the received first measurement data and/or the second measurement data, the frequency point, the number of MRBs, the MBS service type (MBS session), the MBS distribution mode, the multicast mechanism, and the like that are related to the first MBS service and that support the MBS service.

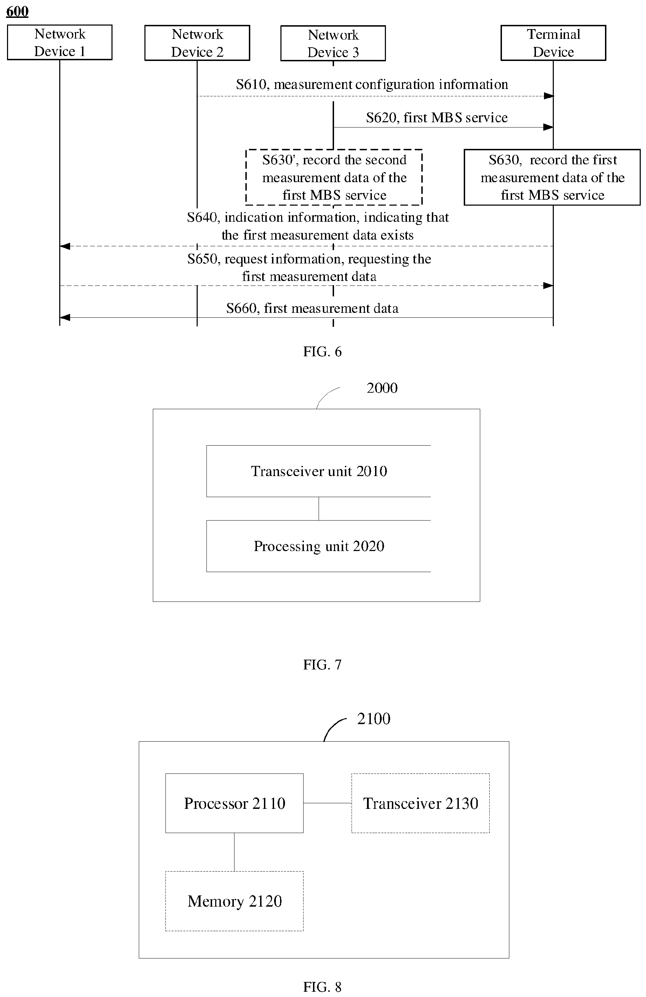

FIG. 6 shows still another schematic flowchart of a communication method according to an embodiment of this application. Method 600 may be considered as a further description of method 300, or method 600 may be considered as a refinement of an application scenario of method 600. The execution entity of method 600 may be a terminal device and a network device, or may be a component of the terminal device and the network device, for example, a chip, a chip system, or a circuit. This application does not impose limitation on this. Method 600 may include the following steps.

S610, the network device 2 sends measurement configuration information to the terminal device.

For example, for the content of the measurement configuration information, refer to the description in Method 300. Details are not described herein again. The network device 2 may be considered as an example of the second network device in Method 300.

S620, the network device 3 sends a first MBS service to the terminal device.

For example, the first MBS service may be the first MBS service in method 300.

S630, the terminal device records the first measurement data of the first MBS service.

For a specific implementation in which the terminal device records the first measurement data, refer to the descriptions in S320. Details are not described herein again. For example, the terminal device may record the first measurement data based on the measurement configuration information.

S660, the terminal device sends the first measurement data to the network device 1.

For example, the network device 1 may be considered as an example of the first network device in method 300. It should be understood that the network device 1 is a network device capable of providing the first MBS service to the terminal device.

In some implementations, the network device 2 may be a serving network device of the terminal device when the terminal device is in a connected state. The network device 3 may be a network device to which a cell on which the terminal device camps belongs or to which a primary cell belongs. The network device 1 may be a serving network device (or referred to as a target access network device) of the terminal device when the terminal device re-enters a connected state or is always in a connected state.

Optionally, method 600 may further include S630': the network device 3 records second measurement data of the first MBS service.

Optionally, before S660 is performed, method 600 may further include S640 and S650. For example, when the terminal device records the first measurement data by using the logged MDT, the terminal device may further perform: S640, the terminal device sends indication information to the network device 1, where the indication information indicates that the first measurement data exists; and S650, the network device 1 sends request information to the terminal device, where the request information is used to request the first measurement data.

In the embodiments of this application, the network device 1 may adjust, based on the received first measurement data and/or the second measurement data, the frequency point, the number of MRBs, the type of the MBS service (the MBS session), the MBS distribution mode, the multicast mechanism, and the like that are related to the first MBS service and that support the MBS service.

The foregoing describes, with reference to FIG. 1 to FIG. 6, the communication method provided in the embodiments of this application. In various embodiments of this application, unless otherwise specified or there is a logical conflict, terms and/or descriptions in various embodiments are consistent and can be mutually referenced. Technical features in different embodiments may be combined based on an internal logical relationship thereof, to form a new embodiment. For example, any two or all of method 400, method 500, and method 600 may be combined.

The following provides a detailed description of the communication apparatus provided in the embodiments of this application, with reference to FIG. 7 to FIG. 9. It should be understood that the descriptions of the apparatus embodiments correspond to the descriptions of the method embodiments. Therefore, for content that is not described in detail, refer to the foregoing method embodiments. For brevity, details are not described herein again.

FIG. 7 is a schematic block diagram of a communication apparatus 2000 according to an embodiment of this application. The apparatus 2000 includes a transceiver unit 2010 (or referred to as a transceiver module) and a processing unit 2020 (or referred to as a processing module). The transceiver unit 2010 may be configured to implement a corresponding receiving and sending function. The processing unit 2020 may be configured to implement a corresponding processing function. The communication apparatus may be configured to perform the method performed by the terminal device or the network device in any one of the embodiments shown in FIG. 3 to FIG. 6.

Optionally, the transceiver unit 2010 may include a sending unit and a receiving unit. The sending unit is configured to perform a sending operation in the foregoing method embodiments. The receiving unit is configured to perform a receiving operation in the foregoing method embodiments.

Optionally, the communication apparatus 2000 further comprises a storage unit. The storage unit may be configured to store instructions and/or data. The processing unit 2020 may read the instructions and/or data in the storage unit, so that the apparatus implements the related actions performed by the terminal device or the network device in the foregoing method embodiments.

In some implementations, the communication apparatus 2000 is configured to perform the actions executed by the terminal device in any one of the embodiments of the method shown in FIG. 3 to FIG. 6.

Specifically, the transceiver unit 2010 is configured to: receive a first MBS service. The processing unit 2020 is configured to: record the first measurement data of the first MBS service. The transceiver unit 2010 is further configured to: send the first measurement data to the first network device.

Optionally, the transceiver unit 2010 is further configured to: receive measurement configuration information from a second network device, where the measurement configuration information indicates the terminal device to record the first measurement data. The processing unit 2020 is configured to: record the first measurement data according to the measurement configuration information.

Optionally, the measurement configuration information indicates at least one of the following: at least one MBS session identifier, wherein each MBS session identifier in the at least one MBS session identifier is used to identify at least one MBS service; at least one MBS service area, wherein each MBS service area in the at least one MBS service area provides at least one MBS service; or at least one downlink frequency that supports an MBS service. In this case, the processing unit 2020 is configured to perform at least one of the following: recording the first measurement data when the at least one MBS session identifier indicates the first MBS service and the transceiver unit 2010 receives the first MBS service; recording the first measurement data when the transceiver unit 2010 receives the first MBS service in the at least one MBS service area; or recording the first measurement data when the transceiver unit 2010 receives the first MBS service in the at least one downlink frequency that supports an MBS service.

Optionally, the processing unit 2020 is further configured to: based on a distribution mode of the first MBS service, determine a minimization of drive tests MDT mode used to record the first measurement data; and record the first measurement data in the MDT mode.

Optionally, the processing unit 2020 is further configured to: when the distribution mode of the first MBS service is broadcast, determine that the MDT mode is logged MDT; or, when the distribution mode of the first MBS service is multicast or unicast, determine that the MDT mode is immediate MDT.

Optionally, the processing unit 2020 is further configured to: use the logged MDT to record the first measurement data.

Optionally, the transceiver unit 2010 is further configured to: send indication information to the first network device, where the indication information indicates the existence of the first measurement data.

Optionally, the transceiver unit 2010 is further configured to: receive request information from the first network device, where the request information is used to request the first measurement data; and send the first measurement data to the first network device according to the request information.

In some implementations, the communication apparatus 2000 is configured to perform the actions performed by the network device (for example, the first network device, the second network device, or any one of the network devices 1 to 3) in any one of the embodiments shown in FIG. 3 to FIG. 6.

Specifically, the transceiver unit 2010 is configured to: send a first MBS service to a terminal device. The processing unit 2020 is configured to: record second measurement data of the first MBS service, where the second measurement data is used to determine coverage information and/or QoS information of the first MBS service.

Optionally, the transceiver unit 2010 is further configured to: receive first measurement data from the terminal device.

Optionally, the transceiver unit 2010 is further configured to: send measurement configuration information to the terminal device, where the measurement configuration information indicates the terminal device to record the first measurement data.

Optionally, the transceiver unit 2010 is further configured to: receive indication information from the terminal device, where the indication information indicates that the first measurement data exists.

Optionally, the transceiver unit 2010 is further configured to: send request information to the terminal device, where the request information is used to request the first measurement data.

Optionally, the second measurement data includes at least one of the following: a downlink PDCP SDU data volume; average downlink user throughput rate; downlink packet delay; or downlink packet loss rate. In this case, the processing unit 2020 is configured to: when the distribution mode of the first MBS service is broadcast or multicast, record the second measurement data by using a granularity of each MRB, or record the second measurement data by using a granularity of each MRB of each terminal device. Alternatively, the processing unit 2020 is configured to: when the distribution mode of the first MBS service is unicast, record the second measurement data by using a granularity of each DRB, or record the second measurement data by using a granularity of each DRB of each terminal device.

Optionally, the second measurement data may further include the number of terminal devices that receive the first MBS service. The number of terminal devices that receive the first MBS service includes at least one of the following: the number of terminal devices that receive the first MBS service in a cell served by the network device; the number of terminal devices determined by the processing unit 2020 at a granularity of each MBS service or session identifier in the first MBS service; the number of terminal devices determined by the processing unit 2020 by using each MBS broadcast service in the first MBS service as a granularity; the number of terminal devices determined by the processing unit 2020 by using each MBS multicast service in the first MBS service as a granularity; and the number of terminal devices determined by the processing unit 2020 by using each MRB in the first MBS service as a granularity.

It should be understood that the specific process in which each unit performs the corresponding steps above has been described in detail in the foregoing method embodiments. For brevity, the specific process is not described herein again.

It should also be understood that the apparatus 2000 herein is embodied in the form of a functional unit. The term "unit" herein may refer to an application-specific integrated circuit (application-specific integrated circuit, ASIC), an electronic circuit, a processor (for example, a shared processor, a dedicated processor, or a group processor) and a memory used to execute one or more software or firmware programs, a merged logic circuit, and/or other appropriate components that support the described functions. In an optional example, a person skilled in the art may understand that the apparatus 2000 may be specifically the communication apparatus in the foregoing embodiments, and may be configured to perform the corresponding processes and/or steps of the communication apparatus in the foregoing method embodiments. To avoid repetition, details are not described herein again.

The apparatus 2000 in the foregoing solutions has a function of implementing corresponding steps performed by the communication apparatus (for example, a terminal device or a network device) in the foregoing method. The function may be implemented by using hardware, or may be implemented by executing corresponding software by hardware. The hardware or software comprises one or more modules corresponding to the foregoing functions. For example, the transceiver unit may be replaced by a transceiver (For example, the sending unit in the transceiver unit may be replaced by a transmitter, and the receiving unit in the transceiver unit may be replaced by a receiver.), another unit, such as a processing unit, may be replaced by a processor, and separately perform a receiving and sending operation and a related processing operation in each method embodiment.

In addition, the transceiver unit 2010 may be a transceiver circuit (for example, may include a sending circuit, or may further include a receiving circuit). The processing unit 2020 may be a processing circuit.

It should be noted that the apparatus in FIG. 7 may be the communication device (for example, the terminal device or the network device) in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 8 shows a schematic diagram of another communication apparatus 2100 according to an embodiment of this application. The apparatus 2100 includes a processor 2110, the processor 2110 is coupled to a memory 2120, and the memory 2120 is configured to store a computer program or instructions and/or data. The processor 2110 is configured to execute the computer program or instructions stored in the memory 2120, or read the data stored in the memory 2120, to perform the methods in the foregoing method embodiments.

Optionally, the processor 2110 is one or more processors.

Optionally, the memory 2120 is one or more memories.

Optionally, the memory 2120 and the processor 2110 are integrated together, or are disposed separately.

Optionally, as shown in FIG. 8, the apparatus 2100 further includes a transceiver 2130, and the transceiver 2130 is configured to receive and/or send a signal. For example, the processor 2110 is configured to control the transceiver 2130 to receive and/or send a signal.

As an example, the processor 2110 may have the functions of the processing unit 2020 shown in FIG. 7, the memory 2120 may have the functions of the storage unit, and the transceiver 2130 may have the functions of the transceiver unit 2010 shown in FIG. 7.

As a solution, the apparatus 2100 is configured to implement the operations performed by the communication apparatus (such as a terminal device or a network device) in the method embodiments described above.

For example, the processor 2110 is configured to execute the computer program or instructions stored in the memory 2120, to implement the related operations of the communication apparatus in the method embodiments described above.

In some implementations, when the apparatus 2100 is a terminal device, the transceiver 2130 may include a transmitter, a receiver, a radio frequency circuit, an antenna, and an input/output apparatus. The processor 2110 is mainly configured to process a communication protocol and communication data, control the terminal device, execute a software program, process data of the software program, and the like. The memory 2120 is mainly configured to store a software program and data. The radio frequency circuit is mainly configured to perform conversion between a baseband signal and a radio frequency signal, and process the radio frequency signal. The antenna is mainly configured to receive and transmit radio frequency signals in the form of electromagnetic waves. The input/output apparatus (for example, a touchscreen, a display, a keyboard, or the like) is mainly configured to receive data input by a user and output data to the user. It should be noted that some types of terminal devices may not have an input/output apparatus.

When there is a need to send data, the processor performs baseband processing on the data to be sent, and then outputs a baseband signal to the radio frequency circuit. The radio frequency circuit performs radio frequency processing on the baseband signal, and then sends the radio frequency signal through an antenna in the form of electromagnetic waves. When data is sent to a terminal device, the radio frequency circuit receives the radio frequency signal through the antenna, converts the radio frequency signal into a baseband signal, and outputs the baseband signal to the processor. The processor then converts the baseband signal into data and processes the data.

In some other implementations, when the apparatus 2100 is a network device, for example, a base station, the processor 2110 is mainly configured to perform baseband processing, control the base station, and the like. The processor 2110 is usually a control center of the base station, and is configured to control the base station to perform processing operations on the network device side in the foregoing method embodiments. The memory 2120 is mainly configured to store computer program code and data. The transceiver 2130 is mainly configured to receive and send radio frequency signals, and convert radio frequency signals into baseband signals and vice versa. The transceiver 2130 may include an antenna and a radio frequency circuit (not shown in the figure). The radio frequency circuit is mainly configured to perform radio frequency processing.

In this embodiment of this application, the antenna and the radio frequency circuit that have the transceiver function may be considered as the transceiver module of the terminal device or the network device, and the processor that has the processing function may be considered as the processing module of the terminal device or the network device.

In some implementations, the processor 2110 may also be referred to as a processing unit, a processing board, a processing module, a processing apparatus, or the like. The transceiver 2130 may also be referred to as a transceiver unit, a transceiver, a transceiver apparatus, or the like.

When the apparatus 2100 is a chip, the chip includes a processor, a memory, and a transceiver. The transceiver may be an input/output circuit or a communication interface. The processor may be a processing module integrated on the chip, a microprocessor, or an integrated circuit. In the foregoing method embodiments, the sending operation of the terminal device may be understood as output of the chip, and the receiving operation of the terminal device in the foregoing method embodiments may be understood as input of the chip.

It should be understood that the processor mentioned in the embodiments of this application may be a central processing unit (central processing unit, CPU), or may be another general-purpose processor, a digital signal processor (digital signal processor, DSP), or an application specific integrated circuit (application specific integrated circuit, ASIC), a field programmable gate array (field programmable gate array, FPGA) or other programmable logic devices, discrete gates or transistor logic devices, discrete hardware components, and the like. The general-purpose processor may be a microprocessor, or the processor may be any conventional processor, or the like.

It should be further understood that the memory mentioned in the embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), electrically erasable programmable read-only memory (electrically EPROM, EEPROM), or flash memory. The volatile memory may be a random access memory (random access memory, RAM). For example, RAM can be used as an external cache. By way of example but not limitation, the RAM includes the following multiple forms: a static random access memory (static RAM, SRAM), a dynamic random access memory (dynamic RAM, DRAM), and a synchronous dynamic random access memory (synchronous DRAM, SDRAM), double data rate synchronous dynamic random access memory (DDR SDRAM), enhanced synchronous dynamic random access memory (ESDRAM), synchronously connected dynamic random access memory (synchlink DRAM, SLDRAM) and direct rambus random access memory (DR RAM).

It should be noted that, when the processor is a general-purpose processor, a DSP, an ASIC, an FPGA, or another programmable logic device, discrete gate, or transistor logic device, discrete hardware component, the memory (storage module) may be integrated into the processor.

It should also be noted that the memory described in this specification is intended to include, but is not limited to, these and any other memory of a suitable type.

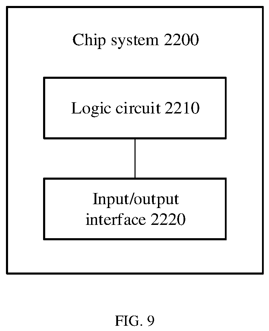

FIG. 9 shows a schematic diagram of a chip system 2200 according to an embodiment of this application. The chip system 2200 (or may also be referred to as a processing system) includes a logic circuit 2210 and an input/output interface (input/output interface) 2220.

Among them, the logic circuit 2210 may be a processing circuit in the chip system 2200. The logic circuit 2210 may be coupled to a storage unit, and invoke an instruction in the storage unit, so that the chip system 2200 can implement the methods and functions in the embodiments of this application. The input/output interface 2220 may be an input/output circuit in the chip system 2200, and is configured to output information processed by the chip system 2200, or input data or signaling information to be processed into the chip system 2200 for processing.

In a solution, the chip system 2200 is configured to implement operations performed by the communication apparatus (such as a terminal device or a network device) in the foregoing method embodiments.

For example, the logic circuit 2210 is configured to implement processing-related operations performed by the communication apparatus (such as a terminal device or a network device) in the foregoing method embodiments. The input/output interface 2220 is configured to implement sending and/or receiving operations performed by the communication apparatus (such as a terminal device or a network device) in the foregoing method embodiments.

An embodiment of this application further provides a computer readable storage medium. The computer readable storage medium stores a computer instruction used to implement the method performed by the communication apparatus (such as a terminal device or a network device) in the foregoing method embodiments.

For example, when the computer program is executed by a computer, the computer can implement the method performed by the communication apparatus (such as a terminal device) in the foregoing method embodiments.

An embodiment of this application further provides a computer program product, including instructions. When the instructions are executed by a computer, the computer can implement the method performed by the communication apparatus (such as a terminal device or a network device) in the foregoing method embodiments.

A person skilled in the art can clearly understand that, for the purpose of convenient and concise description, the explanations and beneficial effects of the related content in any one of the provided communication apparatuses may refer to the corresponding method embodiments provided above. These explanations and beneficial effects will not be further described herein.

In several embodiments provided in this application, it should be understood that the disclosed systems, apparatuses, and methods may be implemented in other ways. For example, the apparatus embodiments described above are merely examples. For example, the division of the units is merely a logical functional division, and in actual implementation, there may be another division manner. For example, a plurality of units or components may be combined or integrated into another system, or some features may be ignored or not performed. Another point is that the mutual couplings or direct couplings or communication connections displayed or discussed may be indirect couplings or communication connections via some interfaces, apparatuses, or units, and may be in an electrical, mechanical, or other form.

The units described as separate parts may or may not be physically separate. The parts displayed as units may or may not be physical units, that is, they may be located in one place, or may be distributed over multiple network units. According to actual needs, some or all of the units may be selected to achieve the objectives of the solutions in the embodiments.

Additionally, in various embodiments of this application, each functional unit may be integrated into one processing unit. Alternatively, each unit may exist physically and independently, or two or more units may be integrated into one unit. The above integrated unit may be implemented in a form of hardware, or may be implemented in a form of a software functional unit.

If the integrated unit is implemented in the form of a software functional unit and sold or used as an independent product, the integrated unit may be stored in a computer-readable storage medium. Based on such an understanding, the part that essentially contributes to the technical solutions of this application, or all or a part of the technical solutions, may be embodied in a form of a software product. The computer software product is stored in a storage medium, and includes several instructions for instructing a computer device (which may be a personal computer, a server, or a network device, or the like) to perform all or a part of the steps of the methods described in various embodiments of this application. The foregoing storage medium includes: various media that can store program code, such as a USB flash drive, a removable hard disk, a ROM, a RAM, a magnetic disk, or an optical disc.

As described above, the foregoing embodiments are merely intended to describe the technical solutions of this application, but not to limit them. Although this application is described in detail with reference to the foregoing embodiments, a person of ordinary skill in the art should understand that they may still modify the technical solutions described in the foregoing embodiments, or perform equivalent replacements of some technical features thereof. However, these modifications or replacements do not cause the essence of the corresponding technical solutions to deviate from the scope of the technical solutions of the embodiments of this application.

## Claims

1. A communication method, **characterized in that** it is performed by a terminal device or a chip used for the terminal device, and the method comprises:
receiving a first multicast/broadcast service MBS service;
recording the first measurement data of the first MBS service, wherein the first measurement data is used to determine coverage information and/or quality of service QoS information of the first MBS service; and
sending the first measurement data to a first network device.

2. The method according to claim 1, wherein the method further comprises:
receiving measurement configuration information from a second network device, wherein the measurement configuration information indicates the terminal device to record the first measurement data; and
recording the first measurement data of the first MBS service comprises:
recording the first measurement data based on the measurement configuration information.

3. The method according to claim 2, wherein the measurement configuration information indicates at least one of the following:
at least one MBS session identifier, wherein each MBS session identifier in the at least one MBS session identifier is used to identify at least one MBS service;
at least one MBS service area, wherein each MBS service area in the at least one MBS service area provides at least one MBS service; or
at least one downlink frequency supporting an MBS service.

4. The method according to claim 3, wherein recording the first measurement data comprises at least one of the following:
recording the first measurement data, when the at least one MBS session identifier indicates the first MBS service and the first MBS service is received;
recording the first measurement data, when the first MBS service is received in the at least one MBS service area; or
recording the first measurement data, when the first MBS service is received on the at least one downlink frequency supporting the MBS service.

5. The method according to any one of claims 1 to 4, wherein the method further comprises:
based on the distribution mode of the first MBS service, determining the minimization of drive-tests MDT mode used to record the first measurement data; and
recording the first measurement data comprises:
recording the first measurement data in the MDT mode.

6. The method according to claim 5, wherein the determining, based on the distribution mode of the first MBS service, the MDT mode used to record the first measurement data comprises:
when the distribution mode of the first MBS service is broadcast, determining that the MDT mode is logged MDT; or
when the distribution mode of the first MBS service is multicast or unicast, determining that the MDT mode is immediate MDT.

7. The method according to any one of claims 1 to 4, wherein recording the first measurement data comprises:
using the logged MDT to record the first measurement data.

8. The method according to any one of claims 1 to 7, wherein the method further comprises:
sending indication information to the first network device, wherein the indication information indicates the existence of the first measurement data.

9. The method according to claim 8, wherein the method further comprises:
receiving request information from the first network device, wherein the request information is used to request the first measurement data;
sending the first measurement data to the first network device further comprises:
sending the first measurement data to the first network device based on the request information.

10. The method according to any one of claims 1 to 9, wherein the first measurement data comprises at least one of the following:
the MBS session identifier of the first MBS service;
the number of MBS radio bearers MRB corresponding to the session of the first MBS service;
serving cell identifier information of a session providing the first MBS service;
neighboring cell identifier information of a session providing the first MBS service;
the service area information corresponding to the first MBS service;
downlink reference signal measurement results corresponding to a cell providing the first MBS service;
downlink reference signal measurement results corresponding to a cell providing a second MBS service, wherein the second MBS service is another service other than the first MBS service;
the block error rate corresponding to the session of the first MBS service;
the distribution mode indication information of the first MBS service, wherein the distribution mode indication information is used to indicate that the distribution mode of the first MBS service is one of broadcast, multicast, or unicast;
the multicast distribution mechanism indication information of the first MBS service, wherein the multicast distribution mechanism indication information is used to indicate that the transmission mechanism of the first MBS service is point-to-point transmission or point-to-multipoint transmission; or
the MBS interest indication information of the terminal device, wherein the MBS interest indication information indicates at least one of the following: the frequency of the broadcast service that the terminal device is receiving or is interested in receiving, the session identifier of the MBS service that the terminal device is receiving or is interested in receiving, or the priority of the terminal device receiving a unicast service or a broadcast service.

11. A communication method, **characterized in that** it is performed by a network device or a chip used for the network device, and the method comprises:
sending a first multicast/broadcast service MBS service to a terminal device;
recording second measurement data of the first MBS service, wherein the second measurement data is used to determine coverage information and/or quality of service QoS information of the first MBS service.

12. The method according to claim 11, wherein the method further comprises:
receiving first measurement data from the terminal device, wherein the first measurement data is measurement data of the first MBS service, and the first measurement data is used to determine coverage information and/or QoS information of the first MBS service.

13. The method according to claim 12, wherein the method further comprises:
sending measurement configuration information to the terminal device, wherein the measurement configuration information indicates the terminal device to record the first measurement data.

14. The method according to claim 13, wherein the measurement configuration information indicates at least one of the following:
at least one MBS session identifier, wherein each MBS session identifier in the at least one MBS session identifier is used to identify at least one MBS service;
at least one MBS service area, wherein each MBS service area in the at least one MBS service area provides at least one MBS service; or
at least one downlink frequency supporting an MBS service.

15. The method according to any one of claims 12 to 14, wherein the method further comprises:
receiving indication information from the terminal device, wherein the indication information indicates that the first measurement data exists.

16. The method according to claim 15, wherein the method further comprises:
sending request information to the terminal device, wherein the request information is used to request the first measurement data.

17. The method according to any one of claims 12 to 16, wherein the first measurement data comprises at least one of the following:
the MBS session identifier of the first MBS service;
the number of MBS radio bearers MRB corresponding to the session of the first MBS service;
serving cell identifier information of a session providing the first MBS service;
neighboring cell identifier information of a session providing the first MBS service;
the service area information corresponding to the first MBS service;
downlink reference signal measurement results corresponding to a cell providing the first MBS service;
downlink reference signal measurement results corresponding to a cell providing a second MBS service, wherein the second MBS service is another service other than the first MBS service;
the block error rate corresponding to the first MBS session;
the distribution mode indication information of the first MBS service, wherein the distribution mode indication information is used to indicate that the distribution mode of the first MBS service is one of broadcast, multicast, or unicast;
the multicast distribution mechanism indication information of the first MBS service, wherein the multicast distribution mechanism indication information is used to indicate that the transmission mechanism of the first MBS service is point-to-point or point-to-multipoint; or
the MBS interest indication information of the terminal device, wherein the MBS interest indication information indicates at least one of the following: the frequency of the broadcast service that the terminal device is receiving or is interested in receiving, the session identifier of the MBS service that the terminal device is receiving or is interested in receiving, or the priority of the terminal device receiving a unicast service or a broadcast service.

18. The method according to any one of claims 11 to 17, wherein the second measurement data comprises at least one of the following:
a downlink packet data convergence protocol PDCP service data unit SDU data volume;
downlink average user throughput rate;
downlink packet delay; or
downlink packet loss rate.

19. The method according to claim 18, wherein recording the second measurement data comprises:
when the distribution mode of the first MBS service is broadcast or multicast, recording the second measurement data at a granularity of each MRB, or recording the second measurement data at a granularity of each MRB of each terminal device.

20. The method according to claim 18, wherein recording the second measurement data comprises: when the distribution mode of the first MBS service is unicast, the second measurement data is recorded at a granularity of each radio data bearer DRB, or the second measurement data is recorded at a granularity of each DRB of each terminal device.

21. The method according to claim 18, wherein the second measurement data further comprises the number of terminal devices that receive the first MBS service.

22. The method according to claim 21, wherein the number of terminal devices that receive the first MBS service comprises at least one of the following:
the number of terminal devices that receive the first MBS service in the serving cell of the network device;
the number of terminal devices determined at a granularity of each MBS service or session identifier in the first MBS service;
the number of terminal devices determined at a granularity of each MBS broadcast service in the first MBS service;
the number of terminal devices determined at a granularity of each MBS multicast service in the first MBS service; or
the number of terminal devices determined at a granularity of each MRB in the first MBS service.

23. A communication apparatus, comprising a module configured to perform the method according to any one of claims 1 to 10, or configured to perform the method according to any one of claims 11 to 22.

24. A communication apparatus, comprising a transceiver unit and a processing unit, wherein the transceiver unit and the processing unit are configured to perform the method according to any one of claims 1 to 10, or configured to perform the method according to any one of claims 11 to 22.

25. A communication apparatus, comprising at least one processor, wherein the at least one processor is coupled to at least one memory, and the at least one processor is configured to execute a computer program or an instruction stored in the at least one memory, so that the communication apparatus performs the method according to any one of claims 1 to 10, or performs the method according to any one of claims 11 to 22.

26. A communication system, comprising a terminal device and a network device;
wherein the terminal device is configured to perform the communication method according to any one of claims 1 to 10;
the network device is configured to perform the communication method according to any one of claims 11 to 22.

27. A computer-readable storage medium, comprising instructions or program code stored thereon, wherein when the instructions or program code are executed by a processor, the processor is enabled to implement the method according to any one of claims 1 to 10, or the method according to any one of claims 11 to 22.

28. A chip, comprising a processor and a communication interface, wherein the communication interface is configured to send information to or receive information from another communication apparatus other than a communication apparatus including the chip, and the processor is configured to execute the method according to any one of claims 1 to 10, or the method according to any one of claims 11 to 22.
